(19) Europäisches Patentamt
European Patent Office
Office européen des brevets

(11) Publication number: **0 311 072**
**A2**

(12) # EUROPEAN PATENT APPLICATION

(21) Application number: 88116565.8

(22) Date of filing: 06.10.88

(51) Int. Cl.4: C02F 5/08 , C02F 5/14

(30) Priority: 08.10.87 US 105938

(43) Date of publication of application:
12.04.89 Bulletin 89/15

(84) Designated Contracting States:
AT BE CH DE ES FR GB GR IT LI LU NL SE

(71) Applicant: The B.F. Goodrich Company
3925 Embassy Parkway
Akron Ohio 44313(US)

(72) Inventor: Amjad, Zahid
32611 Redwood Blvd.
Avon Lake Ohio 44012(US)
Inventor: Masler III, William Frank
1026 Mattingly Road
Hinckley Ohio 44233(US)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

(54) **Stabilization of metal ions and dispersion of particulates in aqueous systems.**

(57) Stabilization of metal ions and dispersion of particulate matter is accomplished by adding to an aqueous medium containing said metal ions and/or said particulate matter a copolymer and a phosphorus compound in the weight ratio of 10:1 to 1:10; said copolymer contains at least 30% by weight of an unsaturated monocarboxylic or dicarboxylic acid of 3 to 5 carbons, and water-soluble salts thereof, such as acrylic acid; said copolymer has molecular weight of 1,000 to 50,000; and said phosphorus compound is selected from phosphonates and phosphates.

EP 0 311 072 A2

Xerox Copy Centre

# STABILIZATION OF METAL IONS AND DISPERSION OF PARTICULATES IN AQUEOUS SYSTEMS

## BACKGROUND OF THE INVENTION

Citric acid, gluconic acid, and other materials have been used in the past to stabilize iron ions in solution and thus prevent its precipitation in forms such as ferric hydroxide and ferric oxide, wherein iron is in the third oxidation state. Citric acid and cognate materials effectively maintain iron in solution by forming complexes therewith which are soluble in water and thereby remain dissolved in water. Although citric acid and cognate materials are effective as solubilizing agents for iron in solution, they are not antiscalants and are ineffective against scale such as calcium carbonates calcium phosphate, calcium sulfate. magnesium hydroxide, and the like.

U.S. Patent 4,575,425 is directed to a method for inhibiting precipitation of and deposition of calcium oxalate scale in an aqueous system by the use of (a) a compound selected from water-soluble phosphates, phosphonates, and phosphinates, and amino tri(methylene phosphonic acid), and (b) a polyelectrolyte selected from, inter alia, copolymers of acrylic acid and 2-acrylamido-2-methylpropane sulfonic acid. A specific example of a phosphonate is 2-phosphonobutane-1,2,4-tricarboxylic acid.

U.S. Patent 4,640,793 discloses an admixture for inhibiting formation of scale forming salts and for inhibiting corrosion of a metal in an aqueous system comprising (a) a polymer of acrylic acid and 2-acrylamido-2-methylpropane sulfonic aid and (b) a compound selected from polycarboxylates, phosphonates, phosphates, polyphosphates, metal salts and sulfonates thereof. A specific example given of a phosphonate is
2-phosphonobutane-1,2,4-tricarboxylic acid.

A companion case for both inventors is being filed on the same date as this case. The companion case is entitled "Compositions Containing Phosphonoalkane Carboxylic Acid For Scale Inhibition" and covers admixtures and use thereof in scale inhibition. These admixtures comprise a copolymer and a phosphonoalkane carboxylic acid in the weight ratio of 10:1 to 1:10, preferably 5:1 to 1:5. In a preferred embodiment, the copolymer contains polymerized acrylic acid and at least one other monomer. The admixture is used at a level of 0.1 to 200 ppm, preferably 0.5 to 10 ppm, for scale inhibition.

## SUMMARY OF THE INVENTION

This invention pertains to stabilization of metal ions in aqueous systems and/or dispersion of particulate matter in aqueous systems in presence or absence of metal ions by the use of an admixture of a copolymer and a phosphorus compound in the respective weight ratio of 10:1 to 1:10. The copolymer is composed of at least 30% of an unsaturated monocarboxylic or dicarboxylic acid of 3 to 5 carbons, or its water-soluble salt, such as acrylic acid, and at least one other comonomer. The phosphorus-containing compound is selected from water-soluble phosphonates and polyphosphates. Amount of the admixture added to a water system is in the range of 0.1 to 200 ppm.

## DETAILED DESCRIPTION OF THE INVENTION

The compositions described herein, which are admixtures of a copolymer and a phosphorus compound, are effective stabilizers of metal ions and are also effective dispersants of particulate matter when added to an aqueous system containing metal ions and/or particulate matter.

The admixtures contain a copolymer and a phosphorus-containing compound in weight ratio of 10:1 to 1:10, preferably 5:1 to 1:5. For metal ion stabilization, the admixture is added to a water system in amount of 0.1 to 200 ppm, preferably 0.5 to 100 ppm whereas for dispersion of particulate matter, the admixture is also added in the same amount of 0.1 to 200 ppm, preferably 0.5 to 100 ppm. The copolymer is composed of at least 30%, preferably 50 to 90% by weight, of an unsaturated monocarboxylic or dicarboxylic acid of 3 to 5 carbons, or a salt thereof, and at least one other copolymerizable monomer. The copolymer, therefore, can be composed of two, three or more monomers. The copolymers have weight average molecular weight

of 1,000 to 50,000, preferably 2,000 to 20,000.

The copolymer is composed of at least 30%, preferably 50 to 90% by weight, of an unsaturated monocarboxylic or dicarboxylic acid of 3 to 5 carbons, or its salt, with remainder being at least one other monomer selected from other unsaturated monocarboxylic or dicarboxylic acids of 3 to 5 carbons, or water-soluble salts or substituted and unsubtituted alkyl esters thereof, acrylamides, vinyl carboxylates, polymerized vinyl alcohols, vinyl sulfonic acids, acrylamidoalkane sulfonic acids, styrene sulfonic acids, and salts of such acids. In a preferred embodiment, the copolymers contain 50 to 90% by weight of acrylic acid and the copolymers that also contain an acrylamidoalkane sulfonic acid are composed of three or more, preferably three comonomers. Therefore, in one preferred embodiment, a copolymer will be composed of acrylic acid, an acrylamidoalkane sulfonic acid and at least one other copolymerizable monomer selected from the monomer groups defined above.

Specifically, the copolymer of this invention comprises at least two copolymerizable monomers containing at least one unsaturated monocarboxylic and/or dicarboxylic acid of 3 to 5 carbons or a salt thereof. Such copolymers comprise two, three or more of the comonomers selected from the following: acrylic acid; methacrylic acid; itaconic acid; maleic acid; alkyl esters of such acids containing 1 to 6 carbons in each alkyl group; monounsaturated alkyl esters where the alkyl chain contains carboxy, sulfo, or keto groups; acrylamides containing substituents on the nitrogen selected from hydrogen, unsubstituted and substituted alkyl groups containing a total of 1 to 12 carbons; acrylamidoalkane sulfonic acids containing 5 to 13 carbon atoms; vinyl sulfonic acids; hydroxyalkyl acrylates and methacrylates of 2 to 4 carbons in the hydroxyalkyl group, alkoxyalkyl acrylates and methacrylates of 1 to 10 carbons in the alkyl group and 2 to 4 carbons in the alkylene group with the alkyleneoxy repeating from 1 to 5 times; styrene sulfonic acids; allyloxy hydroxyalkane sulfonic acid containing a total of 6 to 8 carbon atoms; vinyl carboxylates; and polymerized vinyl alcohols and salts of the acids described herein.

Certain of the suitable comonomers are defined by structural formulas. Acrylamides are defined as follows:

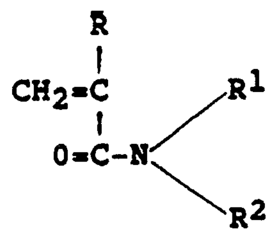

where R is hydrogen or methyl and $R^1$ and $R^2$ are individually selected from hydrogen, alkyl and substituted alkyl groups each containing a total of 1 to 12, preferably 1 to 8 carbons. Substituents on the $R^1$ and $R^2$ groups include alkyl, aryl, carboxyl, and keto groups. Specific examples of $R^1$ and $R^2$ groups include hydrogen, t-butyl, isopropyl, isobutyl, methyl, 2-(2,4,4-trimethylpentyl), and 2-(2-methyl-4-oxopentyl) groups.

Repeating units of the alkyl acrylates are defined as follows:

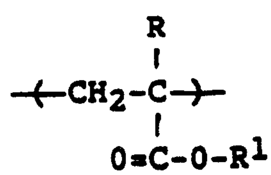

where R is hydrogen or methyl and $R^1$ is an alkyl radical of 1 to 6, preferably 1 to 4 carbon atoms. $R^1$ is selected from alkyl groups of 1 to 6 carbons or substituted alkyl groups where $R^1$ is defined as $R^2$-Y, and $R^2$ is an alkyl group containing from 1 to 6 carbon atoms and Y is $-SO_3X$, $-C(O)R^3$, or $-CO_2X$ where X is hydrogen, alkali metal, alkaline earth metal, or ammonium, and $R^3$ is alkyl of 1 to 3 carbon atoms. In a preferred embodiment, the $R^1$ group is unsubstituted. Specific examples of suitable monomeric alkyl acrylates and methacrylates include ethyl acrylate, ethyl methacrylate, sulfoethyl methacrylate, sulfopropyl acrylate, sulfoproyl acrylate, and carboxyethyl acrylate.

Vinyl sulfonic acid is defined as follows:

$CH_2 = CH\text{-}SO_3H$

Included herein are also water-soluble salts of vinyl sulfonic acid wherein the hydrogen of the $SO_3H$ group is replaced with an alkali metal, alkaline earth metal, or an ammonium group, preferably an alkali metal or ammonium group.

Hydroxyalkyl acrylates are defined as follows:

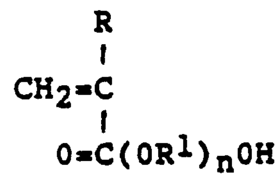

where R is hydrogen or a methyl group; and $R^1$ is selected from lower alkylene groups of 2 to 6, preferably 2 to 4 carbon atoms, with the alkylenoxy group repeating 1 to 5 times. Some specific examples of suitable hydroxyalkyl acrylates include hydroxypropyl acrylate and hydroxypropyl methacrylate.

Alkoxyalkyl acrylates are defined as follows:

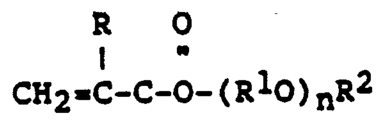

where R is hydrogen or methyl, $R^1$ is alkylene containing from 2 to 4, preferably 2 to 3 carbon atoms, n is an integer from 1 to 5, preferably 1 to 3, and $R^2$ is an alkyl group containing from 1 to 10, preferably 1 to 4 carbon atoms. Specific examples of alkoxyalkyl acrylate monomers include methoxyethyl acrylate, cellosolve methacrylate, and 2-(2-ethoxyethoxy)ethyl acrylate.

Repeating units of suitable acrylamidoalkane sulfonic acids and salts thereof have the general formula

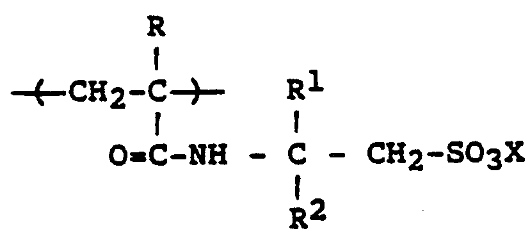

where R can be hydrogen or methyl; X is selected from hydrogen, ammonium, alkali metals or alkaline earth metals, particularly hydrogen, ammonium, or an alkali metal; and $R^1$ and $R^2$ are individually selected from hydrogen and alkyl groups of 1 to 4 carbon atoms. In a preferred embodiment, R is hydrogen, $R^1$ and $R^2$ are each an alkyl group of 1 to 3 carbon atoms. The letter X in the above structural formula represents hydrogen or any metal cation which does not adversely affect the water solubility of the polymer, such as sodium, potassium and ammonium cations. In addition, X may also represent calcium, magnesium, and lithium, since they do not present any adverse effects on the solubility of the polymer. The acrylamidoalkane sulfonic acid monomer which has been found to be particularly suitable in accordance with the present invention is
2-acrylamido-2-methylpropane sulfonic acid, or a salt thereof, which has the following structural formula:

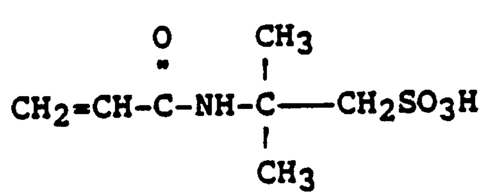

Styrene sulfonic acids and salts thereof are defined as follows:

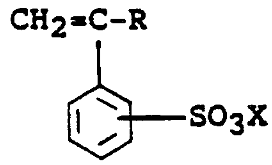

where R is hydrogen or a lower alkyl group of 1 to 6 carbon atoms, preferably hydrogen, and X is alkali metal or alkaline earth metal or ammonium, particularly hydrogen, ammonium or alkali metal. A particularly suitable sulfonic acid is styrene sulfonic acid where R is hydrogen and the $-SO_3X$ group is at the 3 or 4 position on the phenyl ring. The salts of styrene sulfonic acids are water-soluble. The sodium salt of styrene sulfonic acid is available commercially.

Allyloxy hydroxyalkane sulfonic acids and salts thereof are defined as follows:

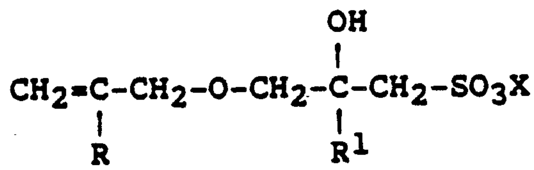

where R is hydrogen or methyl, $R^1$ is also hydrogen or methyl, and X is selected from hydrogen, alkali metal, alkaline earth metal and ammonium.

The vinyl carboxylates are defined as follows:

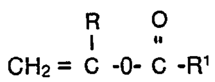

where R is hydrogen or a lower alkyl group of 1 to 6 carbon atoms, preferably 1 to 4, and $R^1$ is selected from alkyl groups of 1 to 12 carbon atoms, preferably 1 to 8.

The vinyl carboxylates, in polymerized form, can be hydrolyzed to contain polymerized vinyl alcohol repeating units of the following structure:

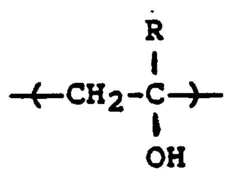

where R is hydrogen or a lower alkyl group of 1 to 6 carbon atoms, preferably 1 to 4. The R group of the hydrolyzed carboxylates corresponds to the R group on the vinyl carboxylates. Specific examples of vinyl carboxylates include vinyl acetate, vinyl propionate, and 2-propenyl acetate.

The monomers can be prepared, if desired, in a conventional manner but they are commercially available and, therefore, can be purchased. Polymerization of the monomers results in an essentially non-crossliked random copolymer, the molecular weight of which can be adjusted with a little trial and error. The copolymer is preferably formed in a high yield ranging from about 50% to about 99% by weight of the comonomers.

It is also a requirement that the copolymer be soluble in water. Typically, the copolymer is used in water in the range of 0.5 to 500 ppm. Thus, high solubility of water treatment compositions is not essential but desirable. The product is preferably shipped in drums as a concentrated aqueous solution containing in the range of about 20% to about 50% by weight of solids per 100 parts of solution, which requires solubility to the extent of at least 20 weight parts per 100 parts of water.

Polymerization of the monomers identified herein can be carried out in a mutual solvent for both, such as in a lower alkanol of about 1 to 6 carbon atoms, or in water, with an effective amount of a free radical initiator sufficient to produce the desired composition within an acceptable period of time. The monomeric acids can be usd as such or can be in a partially or a completely neutralized form prior to polymerization.

The reaction is conveniently carried out in water as the only reaction medium at a temperature in the range of about 30° to about l30°C usually at atmospheric or slightly elevated pressure. The concentration of the copolymer formed may range from about 5% to about 50% by weight, based on total solids, which solution can be shipped directly.

The final aqueous solution of polymer salt is preferably in the range of abut pH 2 to about pH 8, with a total solids content of about 5 to about 50% by weight of polymer in water.

The copolymers formed may have weight average molecular weight in the range of about 1,000 to about 50,000, and preferably about 2,000 to about 20,000, as determined by gel permeation chromatography. The acid numbers of the copolymers formed, as determined by a conventional titration with KOH, may range from about 230 to about 740, corresponding to a weight fraction of from 30% to about 95% by weight of monomer units having COOH groups expressed as acrylic acid. The preferred polymers have more than 50% by weight of free carboxyl groups and an acid number in the range from about 390 to about 700.

In a typical polymerization process, a glass lined or stainless steel jacketed reactor is charged with predetermined amounts of monomers along with solvent and a free radical polymerization catalyst under a nitrogen blanket, and the reaction mixture allowed to exotherm under controlled temperature conditions maintained by a heat-transfer fluid in the jacket of the reactor. The pressure under which the reaction occurs is not critical, it being convenient to carry it out under atmospheric pressure.

The other ingredient added to an aqueous system or medium, in addition to the copolymer described above, is a phosphorus compound. The phosphorus compound can be added separately from the copolymer or as an admixture therewith to an aqueous system in the weight ratio of 10:1 to 1:10, preferably 5:1 to 1:5, copolymer to phosphorus compound. The phosphorus compound is selected from the group consisting of water-soluble phosphates and phosphonates. Examples of phosphates include orthophosphates, condensed phosphates such as sodium hexametaphosphate, molecularly dehydrated phosphates, and phosphate esters. Examples of suitable phosphonates include phosphonoalkane carboxylic acid such as 2-phosphonobutane-1,2,4-tricarboxylic acid, amino tri(methylene phosphonic acid), hydroxyethylidene diphosphonic acid, phosphonosuccinic acid, benzene phosphonic acid, polyhexylene polyamine polymethylene phosphonic acid, 2-aminoethyl phosphonic acid, polyamino phosphonates, and the like. Additional phosphonates are identified in U.S. Patent 3,837,803, which is hereby incorporated by reference.

The preferred phosphorus compounds are the phosphonates which include 2-phosphonobutane-1,2,4-tricarboxylic acid, amino tri(methylene phosphonic acid), polyhexylene polyamine phosphonic acid, and hydroxyethylidene diphosphonic acid.

Although this invention pertains, inter alia, to stabilization of metal ions such as iron, manganese, zinc, and aluminum, the most important in this group of metal ions is iron.

Ferous ion, which is soluble in an aqueous medium, is oxidized to the ferric ion. At a low pH of up to about 3 to 4, the ferric ion is also soluble in an aqueous medium but at pH of about 5 and above, it precipitates out in the form of iron hydroxide, i.e., $Fe(OH)_3$, or iron oxide, i.e., $Fe_2O_3$, and other iron compounds where the iron has an oxidation state of three, hereinafter referred to as iron (III).

Fouling by iron compounds, such as iron oxide, iron silicates, and the like, is a constant threat to the efficient operation of industrial systems. Iron can originate in the feed water or it can develop within the system through the corrosion of pipes and metal equipment. It is known that trace amounts of iron (III) on the order of 1-5 ppm, when present in a recirculating system, can adversely affect the performance of scale control agents such as polyacrylates, polymethacrylates, copolymers of acrylic acid and vinyl acetate, and the like. Although an aqueous system containing iron (III) in solution can be stabilized by the use of chelating agents such as citric acid, the performance of such agents is strongly dependent on water chemistry such as ionic strength, pH, temperature, and the like. Furthermore, chelating agents such as citric acid at levels of 2-20 ppm do not show any threshold inhibition property against the prevalent scale, and therefore, are ineffective against such scale.

The invention here resides in the discovery that the compositions disclosed herein are not only effective in stabilizing metal ions in solution but that such compositions are also effective against scale in the presence of soluble metal ions and as dispersants of particulate matter. Examples of particulate matter include iron oxides, silt, clays, alumina, aluminum silicates, and calcium and magnesium deposits of carbonates, sulfates, oxalates and phosphates.

Suitable aqueous systems or media include cooling and boiler water, brine solutions such as are processed in desalination plants, particularly in the multiple evaporators thereof; and brackish waters containing a high concentration of salts such as are typically encountered in membrane devices for reverse osmosis processes. Still other aqueous systems include process water used in various oil field applications and circulating saline and oily water where the water is present in a major amount by weight, most

particularly in secondary oil recovery operations.

This invention is further demonstrated by the following examples wherein a host of different admixtures were used to stabilize iron in an aqueous solution. The solutions of different admixtures or compositions were prepared by admixing calcium chloride, magnesium chloride, sodium sulfate, sodium chloride, and sodium bicarbonate. Following the addition of ferric chloride to these solutions, pH thereof was adjusted to 7.0. The solutions were filtered at end of 1 hour to 2-1/2 hours, as noted, and amount of iron remaining in solution was determined by atomic absorption.

## EXAMPLE 1

This example demonstrates effectiveness of the inventive admixtures in the stabilization of metal in the presence of other ions in an aqueous medium. Various admixtures of a polymer and a phosphonoalkane carboxylic acid were tested at room temperature for iron stabilization under the following conditions:

Ca = 300 ppm
Mg = 300 ppm
Na = 1,113 ppm
Cl = 2,170 ppm
Iron = 1.0 ppm
Time = 2 hours
pH = 7

In the tabulation of the data, Product A was the polymer and Product B was the 2-phosphonobutane-1,2,4-tricarboxylic acid (PCA), dosage is given in ppm, and stabilization is given in % stabilization. The following contractions appear in the tabulated results:

AA = acrylic acid
t-BuAm = tertiary butyl acrylamide
MAA = methacrylic acid
Am = acrylamide
CA = carbitol acrylate
AMPS = 2-acrylamido-2-methylpropane sulfonic acid
AMP = amino tri(methylene phosphonic acid)
PCA = 2-phosphonobutane-1,2,4-tricarboxylic acid
HAMPA = polyhexylene polyamine polymethylene phosphonic acid
HEDP = 1-hydroxyethylidene-1,1-diphosphonic acid

The iron stabilization results are given in Table A, below:

TABLE A

| Exp. No. | Products: A (Polymer) | Products: B (Phosphorus Compound) | Product Dosage: A (ppm) | Product Dosage: B(ppm) | % Iron Stabilization: Actual | % Iron Stabilization: Expected | % Iron Stabilization: Synergism |
|---|---|---|---|---|---|---|---|
| 1 | None | HEDP | 0 | 0.75 | 15 | 15 | NA |
| 2 | None | HEDP | 0 | 1.1 | 30 | 30 | NA |
| 3 | None | HEDP | 0 | 1.5 | 52 | 52 | NA |
| 4 | None | HEDP | 0 | 2.0 | 84 | 84 | NA |
| 5 | None | AMP | 0 | 1.1 | 9 | 9 | NA |
| 6 | None | PCA | 0 | 1.1 | 1 | 1 | NA |
| 7 | None | HAMPA | 0 | 1.1 | 7 | 7 | NA |
| 8 | AA:MAA:t-BuAm 60:20:20 | 0 | 1.1 | 0 | 1 | 1 | NA |
| 9 | " " " " " | 0 | 1.5 | 0 | 20 | 20 | NA |
| 10 | " " " " " | 0 | 2.0 | 0 | 72 | 72 | NA |
| 11 | " " " " " | HEDP | 1.1 | 1.1 | 95 | 31 | +64 |
| 12 | " " " " " | AMP | 1.1 | 1.1 | 57 | 10 | +47 |
| 13 | " " " " " | PCA | 1.1 | 1.1 | 42 | 2 | +40 |
| 14 | " " " " " | HAMPA | 1.1 | 1.1 | 64 | 8 | +56 |
| 15 | AA:t-BuAm 80:20 | None | 1.1 | 0 | 10 | 10 | NA |
| 16 | " " " 80:20 | HEDP | 1.1 | 1.1 | 82 | 40 | +42 |
| 17 | " " " 80:20 | AMP | 1.1 | 1.1 | 41 | 19 | +22 |

POOR QUALITY

TABLE A cont'd.

| Exp. No. | Product: A (Polymer) | Product: B (Phosphorus Compound) | Product Dosage: A (ppm) | Product Dosage: B(ppm) | % Iron Stabilization: Actual | % Iron Stabilization: Expected | % Iron Stabilization: Synergism |
|---|---|---|---|---|---|---|---|
| 18 | AA:MAA:Am:CA 54:21:9:16 | None | 1.1 | 0 | 1 | 1 | NA |
| 19 | " " " " " " | HEDP | 1.1 | 1.1 | 85 | 31 | +54 |
| 20 | " " " " " " | AMP | 1.1 | 1.1 | 44 | 10 | +34 |
| 21 | " " " " " " | PCA | 1.1 | 1.1 | 28 | 2 | +26 |
| 22 | AA:AMPS 70:30 | None | 1.1 | 0 | 2 | 2 | NA |
| 23 | " " " " | HEDP | 1.1 | 1.1 | 75 | 32 | +43 |
| 24 | AA:Am:AMPS 60:20:20 | None | 1.1 | 0 | 60 | 60 | NA |
| 25 | " " " " " | HEDP | 1.1 | 1.1 | 100 | 90 | +10 |
| 26 | AA:AMPS:t-BuAm 60:20:20 | None | 0.75 | 0 | 5 | 5 | NA |
| 27 | AA:AMPS:t-BuAm 60:20:20 | HEDP | 0.75 | 0.75 | 50 | 20 | +30 |
| 28 | " " " " " " | PCA | 1.1 | 1.1 | 73 | 53 | +20 |
| 29 | AA:MAA:AMPS:t-BuAm 60:20:10:10 | None | 1.1 | 0 | 1 | 1 | NA |
| 30 | " " " " " " " " | HEDP | 1.1 | 1.1 | 99 | 31 | +68 |

The above results demonstrate, without exception, that synergistic results are obtained when a polymer is combined with a polyphosphate. The notation "NA" represents "not applicable" in instances when a metal ion stabilizing composition was used which was devoid of either a phosphorus compound or a polymer. The polymers tested included about 50 to 80% by weight of acrylic acid as an unsaturated monocarboxylic acid and different comonomers varying from about 20% by weight to about 50% by weight.

The polymers were composed of two or three comonomers and can also be referred to as copolymers. The comonomers in the preferred polymers include at least one monounsaturated carboxylic acid, especially acrylic acid, and at least one other comonomer selected from the group consisting of monounsaturated mono or dicarboxylic acids of 3 to 5 carbons such as methacrylic acid. substituted acrylamide such as, t-butyl acrylamide, glycol ether acrylate such as, carbitol acrylate or diethylene glycol ethyl ether acrylate, and an acrylamidoalkane sulfonic acid such as, 2-acrylamido-2-methylpropane sulfonic acid. The phosphorus compounds tested were selected from phosphonates and included aminoalkyl and alkylene phosphonic acids, hydroxyalkyl diphosphonic acids, and phosphonoalkane carboxylic acids. Specific examples of the phosphonates tested included amino tri(methylene phosphonic acid), polyhexylene polyamine polymethylene phosphonic acid, 1-hydroxyethylidene-1,1-diphosphonic acid, and 2-phosphonobutane-1,2,4-tricarboxylic acid.

## Claims

1. Method for stabilizing metal ions in an aqueous medium comprising adding to said aqueous medium a water-soluble copolymer and a water-soluble phosphorus compound in the respective weight ratio of 10:1 to 1:10; said copolymer contains at least 30% by weight of at least one carboxylic are selected from unsaturated monocarboxylic or dicarboxylic acids of 3 to 5 carbons or their water-soluble salts; said copolymer has weight average molecular weight of 1,000 to 50,000; and said phosphorus compound is selected from phosphonates, phosphates, and mixtures thereof.

2. Method of claim 1 wherein comonomers of said copolymer are selected from unsaturated monocarboxylic and dicarboxylic acids of 3 to 5 carbons, acrylamides, substituted and unsubstituted alkylacrylates, hydroxyalkyl acrylates, alkoxyalkyacrylates, allyloxy hydroxyalkane sulfonic acids, styrene sulfonic acids, acrylamidoalkane sulfonic acids, vinyl carboxylates, hydrolyzed carboxylates, water-soluble salts of such acids, alkyl esters thereof of 1 to 6 carbons in the alkyl group, and mixtures of such comonomers.

3. Method of claim 1 wherein said comonomers of said copolymer are selected from acrylic acid, methacrylic acid, itaconic acid, and water-soluble salts of such acids; alkylacrylates, methacrylates, and itaconates containing 1 to 6 carbon atoms in each alkyl group; alkyl acrylates, methacrylates and itaconates substituted with carboxy, sulfo and keto groups, and containing 1 to 6 carbons in each alkyl group; acrylamides containing substituents on the nitrogen atom selected from hydrogen, unsubstituted alkyl groups of 1 to 12 carbons and substituted alkyl groups containing a total of 1 to 12 carbon atoms; acrylamidoalkane sulfonic acids; vinyl sulfonic acid; hydroxyalkyl acrylates containing 2 to 4 carbons in the alkylene group with the alkyleneoxy group repeating 1 to 5 times; alkoxyalkyl acrylates containing 1 to 10 carbons in the alkyl group and 2 to 4 carbons in the repeating alkylene group wherein the alkyleneoxy group repeats 1 to 5 times; styrene sulfonic acids; allyloxy hydroxyalkane sulfonic acids containing a total of 6 to 8 carbon atoms; vinyl carboxylates; polymerized vinyl alcohol residues; salts of such acids; and mixtures of such monomers; and wherein said polyphosphate is selected from phosphonates.

4. Method of claim 1 wherein comonomers of said copolymer are selected from acrylic acid; methacrylic acid; itaconic acid; dialkyl itaconates containing 1 to 6 carbons in each alkyl group; acrylamides and methacrylamides where one or both substituents on the nitrogen atom are individually selected from hydrogen, alkyl groups of 1 to 12 carbons, substituted alkyl groups containing a total of 1 to 12 carbon atoms. acrylamidoalkane sulfonic acids and salts thereof defined as follows:

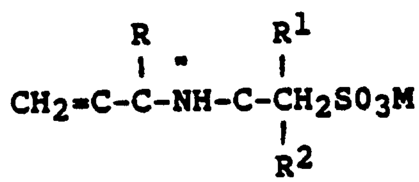

where $R^1$ and $R^2$ are selected from hydrogen and alkyl groups of 1 to 4 carbons; and M is selected from hydrogen, ammonium, alkali metals, and alkaline earth metals; alkyl acrylates defined as follows:

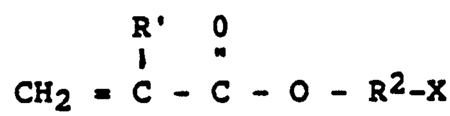

where $R^1$ is selected from hydrogen and methyl, $R^2$ is selected from alkyl groups of 1 to 6 carbons, and X is selected from hydrogen, $-SO_3M$, $-CO_2M$, and $C(0)-R^3$ where M is hydrogen, ammonium, alkali metal or alkaline earth metal, and $R^3$ alkyl group of 1 to 3 carbon atoms; vinyl sulfonic acid and salts thereof defined as follows:

$CH_2 = CH - SO_3X$

where X is selected from hydrogen, alkali metals, alkaline earth metals, and ammonium; hydroxyalkyl acrylates defined as follows:

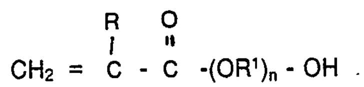

where R is selected from hydrogen and methyl, $R^1$ is selected from alkẏl groups of 2 to 4 carbons and n is 1 to 5; alkoxyalkyl acrylates are defined as follows:

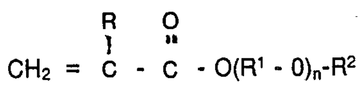

where R is selected from hydrogen and methyl, $R^1$ is selected from alkylene groups of 2 to 4 carbons, $R^2$ is selected from alkyl groups of 1 to 10 carbons, and n is an integer of 1 to 5; styrene sulfonic acids defined as follows:

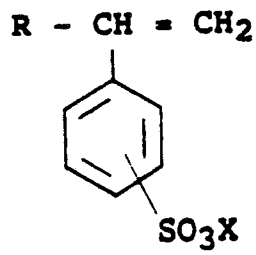

where R is selected from hydrogen and alkyl groups of 1 to 6 carbon atoms and X is selected from alkali metals, alkaline earth metals, and ammonium; allyloxy hydroxyalkane sulfonic acids defined as follows:

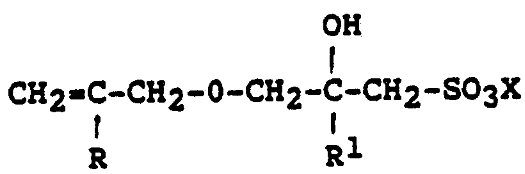

where R and $R^1$ are selected from hydrogen and methyl and X is selected from hydrogen, alkali metals, alkaline earth metals, and ammonium; vinyl carboxylates defined as follows:

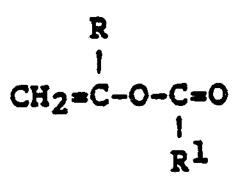

where R is selected from hydrogen and alkyl groups of 1 to 6 carbon atoms and $R^1$ is selected from alkyl groups of 1 to 12 carbons; and polymerized vinyl alcohol residues defined as follows:

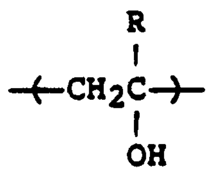

where R is selected from hydrogen and alkyl groups of 1 to 6 carbons.

5. Method of claim 2 wherein said acrylamides are selected from acrylamides and methacrylamides where one or both substituents on the nitrogen are selected from hydrogen, alkyl groups of 1 to 8 carbons, substituted alkyl groups containing a total of 1 to 12 carbons, alkyl acrylates defined as follows:

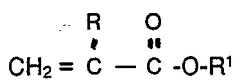

where R is selected from hydrogen and methyl, and $R^1$ is selected from alkyl groups of 1 to 6 carbons, or substituted alkyl groups where $R^1$ is defined as $R^2$-Y and $R^2$ is an alkyl group containing from 1 to 6 carbon atoms and Y is $-SO_3X$, $-C(0)R^3$, or $-CO_2X$, where X is hydrogen, alkali metal, alkaline earth metal, or ammonium, and $R^3$ is alkyl of 1 to 3 carbon atoms; vinyl sulfonic acids and salts thereof defined as follows:

$CH_2 = CH\text{-}SO_3X$

where X is selected from hydrogen, alkali metals, alkaline earth meals, and ammonium; hydroxyalkyl acrylates defined as follows:

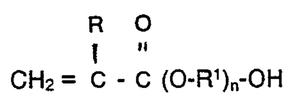

where R is selected from hydrogen and methyl, and $R^1$ is selected from alkyl groups of 2 to 4 carbons and n is 1 to 5; alkoxyalkyl acrylates are defined as follows:

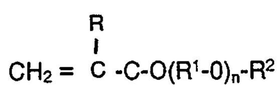

where R is selected from hydrogen and methyl, $R^1$ is selected from alkylene groups of 2 to 4 carbons, $R^2$ is selected from alkyl groups of 1 to 10 carbons. and n is an integer of 1 to 5; styrene sulfonic acids defined as follows:

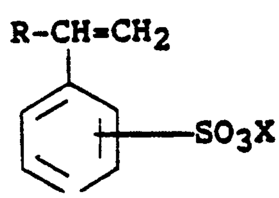

where R is selected from hydrogen and alkyl groups of 1 to 6 carbon atoms and X is selected from alkali metals, alkaline earth metals, and ammonium; and acrylamidoalkane sulfonic acids and salts thereof defined as follows:

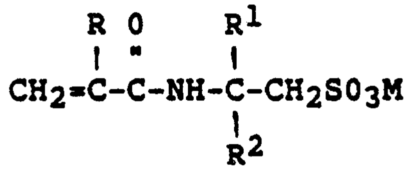

where R is selected from hydrogen and methyl, and $R^1$ and $R^2$ are individually selected from hydrogen and alkyl groups of 1 to 4 carbons, M is selected from hydrogen, ammonium, alkali metals, and alkaline earth metals.

6. Method of claim 1 wherein said comonomers of said copolymer are selected from itaconic acid, acrylic acid, methacrylic acid, and alkyl esters thereof containing 1 to 6 carbons in each alkyl group; dialkyl itaconates containing 1 to 6 carbon atoms in each alkyl group; acrylamides and methacrylamides where one or both of the substituents on the nitrogen atom are selected from hydrogen and unsubstituted alkyl groups containing 1 to 12 carbons, and substituted alkyl groups each containing a total of 1 to 12 carbons, sulfoalkyl acrylates and methacrylates containing 1 to 6 carbons in each alkyl group, alkoxyalkyl acrylates and methacrylates containing 1 to 10 carbons in each alkyl group and 2 to 4 carbons in each repeating alkylene group. There being 1 to 5 repeating alkyleneoxy groups; hydroxyalkyl acrylates and methacrylates containing 2 to 4 carbons in the repeating alkylene group and containing 1 to 5 repeating alkyleneoxy groups; acrylamidoalkane sulfonic acids and methacrylamidoalkane sulfonic acids containing 2 to 6 carbons in the alkane group, and water-soluble salts thereof; and mixtures of such comonomers; provided that copolymers containing acrylamidoalkane or methacrylamidoalkane sulfonic acid or salt thereof contain at least three comonomers.

7. Method of claim 6 wherein said phosphorus compound is a carboxylic acid contains one to two phosphono groups and two to three carboxylic acid groups, with the alkane group containing 2 to 6 carbon atoms; weight ratio of said copolymer to said phosphonoalkane carboxylic acid is 10:1 to 1:10; and weight average molecular weight of said copolymer is 2,000 to 20,000.

8. Method of claim 7 wherein weight ratio of said copolymer to said phosphonoalkane carboxylic acid is 5:1 to 1:5; said copolymer contains 50 - 90% by weight polymerized unsaturated monocarboxylic or dicarboxylic acid or its salt of 3 to 5 carbon atoms and at least one comonomer selected from other unsaturated monocarboxylic or dicarboxylic acids or salts thereof of 3 to 5 carbons; alkyl acrylates, methacrylates, and itaconates of 1 to 6 carbons in each alkyl group, alkyl acrylates, methacrylates, and itaconates substituted with carboxy, sulfo, and keto groups and containing 1 to 6 carbons in each alkyl group; alkoxyalkyl acrylates and methacrylates containing 1 to 4 carbons in the alkoxy group and 2 to 4 carbons in the repeating alkylene groups, there being 1 to 5 repeating groups; hydroxyalkyl acrylates and methacrylates containing 2 to 4 carbons in the repeating alkylene group, there being from 1 to 5 repeating alkylene groups; unsubstituted and substituted acrylamides containing at least one substituent on the nitrogen atom selected, alkyl groups of 2 to 6 carbons per each alkyl group, 2-acrylamido-2-methylpropyl sulfonic acid, 2-methacrylamido-2-methylpropyl sulfonic acid; styrenesulfonic acid; vinyl acetate; vinyl alcohol; provided that the copolymers containing either or both 2-acrylamido-2-methylpropyl sulfonic acid or 2-methacrylamido-2-methylpropyl sulfonic acid contain at least three comonomers.

9. Method of claim 8 wherein said copolymer has weight average molecular weight of 2,000 to 20,000 and wherein said phosphonoalkane carboxylic acid is 2-phosphonobutane-1,2,4-tricarboxylic acid.

10. Method of claim 5 wherein said metal ions are selected from iron, manganese, aluminum, zinc, and mixtures thereof.

11. Method of claim 9 wherein said metal ions are selected from iron, manganese, aluminum, zinc, and mixtures thereof.

12. Method of claim 9 wherein said metal ions are iron ions.

13. Method of stabilizing metal ions in an aqueous medium and for dispersing particulate matter in said aqueous medium by adding to said aqueous medium said copolymer and said phosphorus compound defined in claim 5.

14. Method of claim 13 wherein said particulate matter is selected from iron oxides, silt, clays, alumina, aluminum silicates, calcium and magnesium deposits, and mixtures thereof.

15. Method of claim 14 wherein amount of iron ions in said aqueous medium is at least 1 ppm.

16. Method of claim 14 wherein said monounsaturated monocarboxylic or dicarboxylic acid is acrylic acid, molecular weight of said copolymer is 2,000 to 20,000, and said phosphonoalkane carboxylic acid is 2-phosphonobutane-1,2,4-tricarboxylic acid.

17. Method of claim 16 wherein said copolymer is composed of three or more comonomers.

18. Method of claim 16 wherein said phosphorus compound is selected from aminoalkyl and alkylene phosphonic acids, hydroxyalkyl diphosphonic acids, phosphonoalkane carboxylic acids, and mixtures thereof; and wherein said copolymer is selected from the following copolymers given in weight parts:

(a) AA:MAA;t-BuAm 60:20:20

(b) AA:MAA:Am:CA 54:21:9:16

(c) AA:Am:AMPS 60:20:20

(d) AA:MAA:AMPS:t-BuAm 60:20:10:10

19. Method of claim 18 wherein said phosphorus compound, wherein the contractions used are defined as follows:

AA = acrylic acid

MAA = methacrylic acid

t-BuAm = tertiary butyl acrylanide

AMPS = 2 - acrylamide - 2 - methylpropane sulfonic acid

CA - carbitol acrylate

is selected from amino tri(methylene phosphonic acid), polyhexylene polyamine polymethylene phosphonic acid, 1-hydroxyethylidene-1,1-diphosphoric acid, and 2-phosphonobutane-1,2,4-tricarboxylic acid.

20. Method of claim 19 wherein said particulate matter is selected from iron oxides and mixtures thereof.